# EUROPÄISCHE PATENTSCHRIFT

(11) **EP 0 670 621 B1**
(45) Veröffentlichungstag und Bekanntmachung des Hinweises auf die Patenterteilung: **06.12.2000**
(21) Anmeldenummer: 95200478.6
(22) Anmeldetag: 27.02.1995
(51) Int. Cl.: H02K 3/26, H02K 3/00

(54) **Elektromotor mit einem Stator und einem Rotor**
Electric motor with one stator and one rotor
Moteur électrique avec un stateur et un roteur

(30) Priorität: 04.03.1994 DE 4407164; 10.06.1994 DE 4420371
(43) Veröffentlichungstag der Anmeldung: 06.09.1995
(73) Patentinhaber: Philips Corporate Intellectual Property GmbH, 52064 Aachen (DE); Koninklijke Philips Electronics N.V., 5621 BA Eindhoven (NL)
(72) Erfinder: Ackermann, Bernd, Dr., c/o Philips P.V. GmbH, D-20097 Hamburg (DE); Bolte, Ekkehard, Dr. Ing., c/o Philips P.V. GmbH, D-20097 Hamburg (DE); Hammers, Anton, c/o Philips P.V. GmbH, D-20097 Hamburg (DE); Stips, Klaus, c/o Philips P.V. GmbH, D-20097 Hamburg (DE); Franse, Jelm, Dr., c/o Philips P.V. GmbH, D-20097 Hamburg (DE); Wang, Ping-Shih, c/o Philips P.V. GmbH, D-20097 Hamburg (DE)
(74) Vertreter: Kupfermann, Fritz-Joachim, Dipl.-Ing.

(56) Entgegenhaltungen:
- EP-A- 0 096 415
- EP-A- 0 264 110
- EP-A- 0 410 293
- DE-A- 4 205 985
- PATENT ABSTRACTS OF JAPAN vol. 7 no. 186 (E-193) [1331] ,16.August 1983 & JP-A-58 089054 (NIHON SAABO K.K.) 27.Mai 1983,
- PATENT ABSTRACTS OF JAPAN vol. 009 no. 065 (E-304) ,26.März 1985 & JP-A-59 201669 (KOKU UCHU GIJUTSU KENKYUSHO;OTHERS: 0J) 15.November 1984,
- PATENT ABSTRACTS OF JAPAN vol. 007 no. 243 (E-207) ,28.Oktober 1983 & JP-A-58 130763 (HITACHI SEISAKUSHO KK) 4.August 1983,

## Beschreibung

Die Erfindung bezieht sich auf einen Elektromotor mit einem Stator, der eine zylinderförmige, von einer Trägerplatte getragenen Spulenkonfiguration aufweist, und einem Rotor, der an einer umlauffähigen Nabe einen Rotormagneten trägt, der an seiner Außenumfangsfläche ein Feld senkrecht zur Drehachse erzeugt und der mit einem glockenförmigen Nabenteil die Spulenkonfiguration umschließt, wobei der Elektromotor mit Lagerungen für die Nabe und mit einem Weicheisenjoch versehen ist, wobei die Spulenkonfiguration frei von weichmagnetischen Teilen und außenseitig von einem mantelförmigen Weicheisenjoch umgeben ist.

Ein derartiger Elektromotor ist aus DE-A-42 05 985 bekannt. Dieser bekannte Elektromotor weist eine rotierende Motorwelle auf, die mit einem Permanentmagneten, einem Rotorträger sowie einem Joch drehfest verbunden ist. Die Motorwelle ist außerhalb des Rotors in einem Gehäuse mittels Lagern gelagert. Diese außerhalb des Rotors angeordneten Lager bedingen ein relativ großes Bauvolumen des Motors, insbesondere beim Einsatz von hydrodynamischen Lagern, die eine große Lagerfläche benötigen. Aufgrund des geschlossenen Gehäuses ist ein derartiger Motor nicht für den Einsatz von Festplattenantrieben geeignet.

Aus der EP 0 410 293 B1 ist ein Elektromotor bekannt, bei dem ein permanentmagnetischer Hohlzylinder auf einer zentralen Achse angeordnet ist, die fest mit einer drehbaren Nabe verbunden ist. Der permanentmagnetische Hohlzylinder wird von einem geblechten Stator umschlossen, der auf einem feststehenden Basisteil angeordnet ist. Der Stator hat eine in Nuten des Eisenblechpaketes eingelegte Spulenwicklung. Die Lagerung der Nabe erfolgt radial und axial mittels hydrodynamischer Lager.

Die Wechselwirkung des genuteten Stators mit dem mehrpolig magnetisierten Permanentmagneten verursacht sogenannte Klebemomente. Dies sind mit der Plattenumdrehung periodische Drehmomente, deren Mittelwert Null ist, die also keinen Beitrag zum Nennmoment liefern. Die Klebemomente verursachen akustische Geräusche, mechanische Schwingungen und Drehzahlschwankungen; sie erhöhen außerdem das erforderliche Anlaufmoment, das vor allem für Festplattenantriebe eine kritische Größe ist.

Fertigungsbedingte Exzentrizitäten zwischen dem Stator aus weichmagnetischem Material und dem permanentmagnetisch Rotor verursachenen Radialkräfte. Diese Radialkräfte erzeugen auch akustische Geräusche und mechanische Schwingungen. Ähnliche Radialkräfte werden erzeugt durch ungünstige Kombinationen der Anzahl von Ankernuten und Magnetpolen. Die durch Exzentrizitäten verursachten Kräfte sind zur Zeit der begrenzende Faktor für die Anwendung hydrodynamischer Spiralrillenlager in kleinen Plattenspeichern; sie sind oft größer als die durch die Nutzlast verursachten Kräfte. Um diesen Kräften zu widerstehen, müssen die Lager wesentlich steifer sein und verbrauchen mehr Leistung, als zur Lagerung der Nutzlast erforderlich wäre. Die hydrodynamischen Lager selbst können nicht überlastet werden; dies würde sich negativ auswirken durch mechanischen Kontakt zwischen massiven Lagerteilen, Verschleiß und schließlich Ausfall des Lagers.

Ursache der Exzentrizitäten in diesen Antrieben sind Genauigkeitsgrenzen bei der Herstellung von einzelnen Komponenten und deren Zusammenbau. Die radialen Kräfte unterliegen daher produktionsbedingten Schwankungen. Bezüglich der Zuverlässigkeit bedeutet dies, daß die Radialkräfte die Varianz in der Belastung der Lager deutlich vergrößern, so daß die Lager mit wesentlich größeren Sicherheitsreserven entworfen werden müssen.

In dem genuteten Stator treten relativ große Eisenverluste auf. Dieses Problem ist vor allem bei Neuentwicklungen von zunehmender Bedeutung, bei denen ein Trend zu höheren Drehzahlen zu beobachten ist.
Die Motorinduktivität ist relativ groß, weil die Wicklung in Nuten des Statoreisens gelegt wird. Dies verschlechtert die Motordynamik. Für Neuentwicklungen, die bei höheren Drehzahlen arbeiten, resultiert daraus außerdem ein verringertes Drehmoment des Motors.
Aus der JP-A-59-201669 ist eine zylindrische Folienwicklung für Gleichstrommotoren bekannt.
Aus der EP-A-392500 und der EP-A-558092 sind Antriebe für Festplatten bekannt, welche genutete Statoren aufweisen. Bei diesen bekannten Antrieben sind zur Lagerung hydrodynamische Lager vorgesehen, die außerhalb des Stators und des Rotors angeordnet sind.

Es ist Aufgabe der Erfindung, einen Motor der eingangs erwähnten Art zu schaffen, der für den Antrieb von Festplatten geeignet ist und bei geringem Bauvolumen den Einsatz von hydrodynamischen Lagern ermöglicht.

Die gestellte Aufgabe ist erfindungsgemäß dadurch gelöst, daß die Nabe auf einer feststehenden, zentralen Motorachse gelagert ist und daß axial innerhalb des Rotormagneten zwischen der Nabe und der feststehenden Motorachse ein hydrodynamisches Radiallager vorgesehen ist.

Nach einer weiteren Ausgestaltung der Erfindung ist vorgesehen, daß das Weicheisenjoch fest mit der Spulenkonfiguration verbunden ist. Die Radialkräfte sind bei einer derartigen Konstruktion deutlich verringert, weil die Dicke des magnetisch wirksamen Luftspaltes jetzt sehr groß ist. Diese Dicke ist gegeben durch den Abstand zwischen dem Permanentmagneten und dem Joch. Der Einfluß einer Exzentrizität ist deutlich reduziert, da sie kleiner als der mechanische Luftspalt sein muß. Dies bedeutet, daß die Exzentrizität in jedem Fall deutlich kleiner als der magnetisch wirksame Luftspalt ist. Aufgrund der eisenfreien Spulenkonfiguration sind die Magnetfelder kleiner als bei einem Motor mit genutetem Stator. Dadurch werden die Eisenverluste reduziert.

Nach einer weiteren Ausgestaltung der Erfindung ist vorgesehen, daß das Weicheisenjoch fest mit der Nabe verbunden ist. Die Radialkräfte wirken bei einer derartigen Konstruktion nicht mehr auf das Lager, da die beiden Teile des Motors, zwischen denen sie wirken, fest miteinander verbunden sind und die Kräfte somit von der mechanischen Konstruktion aufgefangen werden. Der Magnet erzeugt im weichmagnetischen Joch keine Wechselfelder mehr, weshalb keine Eisenverluste mehr auftreten.

Nach einer weiteren Ausgestaltung der Erfindung ist vorgesehen, daß die Spulenkonfiguration aus gebogenen Folienwicklungen besteht. Bei flacher Bauweise wird damit ein hoher Kupferfüllfaktor erreicht.

Es ist bekannt, flächenhafte Motorwicklungen herzustellen, indem man auf Kunststoffolien aufgebrachte Kupferbahnen so ätzt, daß nur noch flächenhafte Spulenwindungen übrigbleiben. Derartige Motorwicklungen sind, wenn die Folien nicht gebogen werden, einwandfrei funktionsfähig und nicht problematisch.

Probleme ergeben sich aber, wenn eine solche Wicklung zu einem Zylinder aufgewickelt wird. Dann kann die sonst so einfache Technik zu Kurzschlüssen zwischen den Leiterbahnen führen. Außerdem lassen sich derartige Wicklungen nur schwer ausreichend rund gestalten, was zur Folge hat, daß unnötig breite Luftspalte geschaffen werden. Durch unrunde Spulen wird auch der exakte Rundlauf beeinträchtigt. Diese Problematik tritt insbesondere bei Kleinmotoren auf, die in Festplatten-Laufwerken zum Einsatz kommen.

In weiterer Ausgestaltung der Erfindung ist deshalb vorgesehen, daß die Folienicklung, die auf einer tragenden Kunststoffolie aufgebaut und durch das Abtragen von Kupfermaterial gebildet ist, mit dem die Kunststoffolie zuvor durchgehend kaschiert wurde, zu einem im wesentlichen gleichmäßig ausgerundeten Zylinder aufgewickelt ist, wobei das flächenhafte Gebilde aus Kunststoffolie und darauf haftenden flächenhaften Spulen so mit einem Haftfüllstoff überzogen ist, daß der Haftfüllstoff die durch das Abtragen des Kupfermaterials gebildeten Spalte zwischen den einzelnen Leiterbahnen ausfüllt, und daß das so stabilisierte Gebilde zu einem Zylinder aufgewickelt ist.

Eine derartige Motorwicklung läßt sich ausreichend rund gestalten. Es ergeben sich keine Kurzschlüsse zwischen einzelnen Windungen.

Die gleichmäßig abgerundete Wicklung ermöglicht geringe Luftspalte und eine exakte Führung an der Nabe. Damit läßt sich bei einem Motor, der als Festplattenantrieb eingesetzt werden soll, die Packungsdichte der Festplatten erhöhen.

Nach einer weiteren Ausgestaltung der Erfindung ist vorgesehen, daß der die Spalten ausfüllende Haftfüllstoff eine solche Stabilität hat, daß die flächenhaften Leitungszüge der Spulen durch ihn so formstabil miteinander verbunden werden, als wären die Spalten noch mit dem abgetragenen Kupfer gefüllt. Mit diesem Trick verhält sich eine geätzte Folie wie eine nicht geätzte Folie. Da eine nicht geätzte Folie einwandfrei rund aufwickelbar ist, gilt dies auch für die nach der Erfindung präparierte Folie.

Nach einer weiteren Ausgestaltung der Erfindung ist vorgesehen, daß als Haftfüllstoff ein aushärtender Kleber verwendet wird.

Nach einer weiteren Ausgestaltung der Erfindung erfolgt das Aufbringen des Haftfüllstoffes durch Siebdruck oder Roller-Coating.

Nach einer weiteren Ausgestaltung der Erfindung ist vorgesehen, daß die Spiralrillenlager aufgeteilt sind in axial und radial wirkende Lager. Dadurch wird eine einwandfreie Führung erhalten. Die immer vorhandenen Radialkräfte werden in ihrer Wirkung minimiert.

Die Erfindung wird anhand der Zeichnung näher erläutert. Es zeigen:
Fig. 1a einen Spindelmotor für einen Festplattenantrieb mit einer eisenlosen Spulenkonfiguration und einem die Spulenkonfiguration umschließenden mantelförmigen weichmagnetischen Joch, das mit der Spulenkonfiguration fest verbunden ist,
Fig. 1b eine Abwandlung des Spindelmotors nach Fig. 1a, bei der das Joch mit der Nabe verbunden ist,
Fig. 2 eine Folie mit flächenhaften Spulenwicklungen,
Fig. 3 einen Schnitt durch einen Teil einer Folie mit aufkaschierten Kupferwicklungen längs der Linie III-III in Fig. 2,
Fig. 4 die aufgewickelte Wicklung, bestehend aus drei Wicklungsstreifen nach Fig. 2, in schaubildlicher Darstellung,
Fig. 5 einen Ausschnitt aus der gekrümmten Wicklung zur Demonstration der absoluten Rundheit.

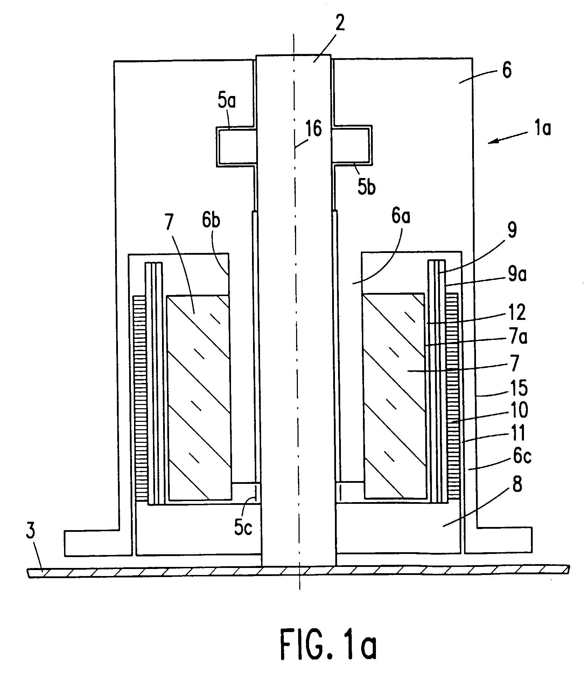

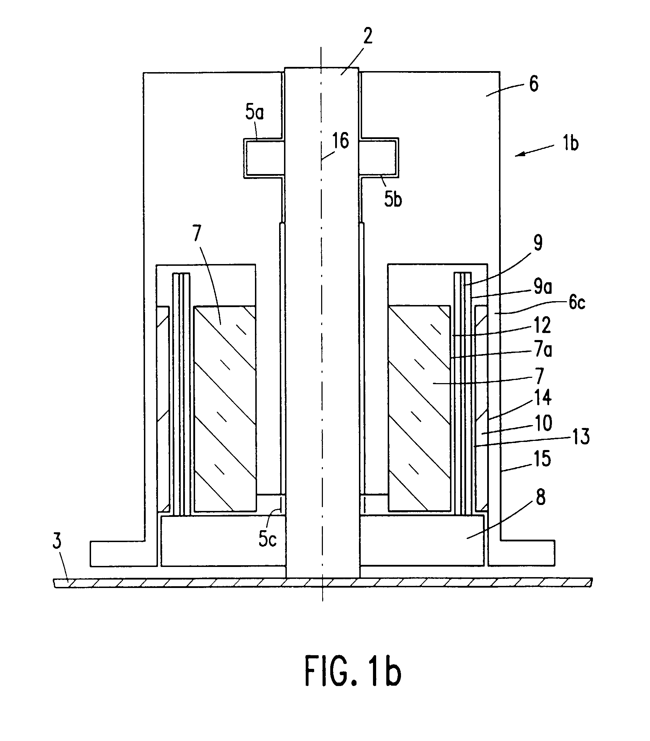

Fig. 1 zeigt im Schnitt einen Spindelmotor 1a, der insbesondere als Antriebsmotor für Festplatten in Datenverarbeitungsmaschinen vorgesehen ist. Eine Motorachse 2 dieses Spindelmotors 1a ist mit einer Platte 3 eines nicht dargestellten Festplattengehäuses fest verbunden. Zwei hydrodynamische Axiallager 5a und 5b lagern im von der Platte 3 abliegenden Achsteil an der Motorachse 2 eine Nabe 6. Ein weiteres hydrodynamisches Spirallager 5c befindet sich nahe einer Trägerplatte 8. Die auf der Motorachse 2 umlauffähig gelagerte Nabe 6 hat einen die Motorachse 2 umschließenden inneren Nabenteil 6a, auf dem an seiner Außenseite 6b ein permanentmagnetischer Rotormagnet 7 befestigt ist. Das vom Rotormagneten 7 erzeugte, an dessen Außenseite 7a befindliche Feld steht senkrecht zur Drehachse 16. An der Motorachse 2 ist eine Trägerplatte 8 angeordnet. Diese trägt außenseitig eine zum Stator des Motors gehörige noch zu beschreibende Spulenkonfiguration 9 und ein noch zu beschreibendes Joch 10. Die Nabe 6 weist weiterhin einen äußeren Nabenteil 6c auf, der seinerseits das Joch 10 glockenförmig umschließt.

Die Spulenkonfiguration 9 besteht aus einer gebogenen Folienwicklung. Die Trägerplatte 8 trägt bei diesem Motoraufbau auf der Außenseite 9a der Spulenkonfiguration 9 das mantelförmige Joch 10 aus weichmagnetischem Material. Bei diesem Aufbau bilden sich zwei Luftspalte 11 und 12 aus, von denen der eine Luftspalt 11 das Joch 10 von der Nabe 6 und der andere Luftspalt 12 den Rotormagneten 7 von der Spulenkonfiguration 9 trennt.

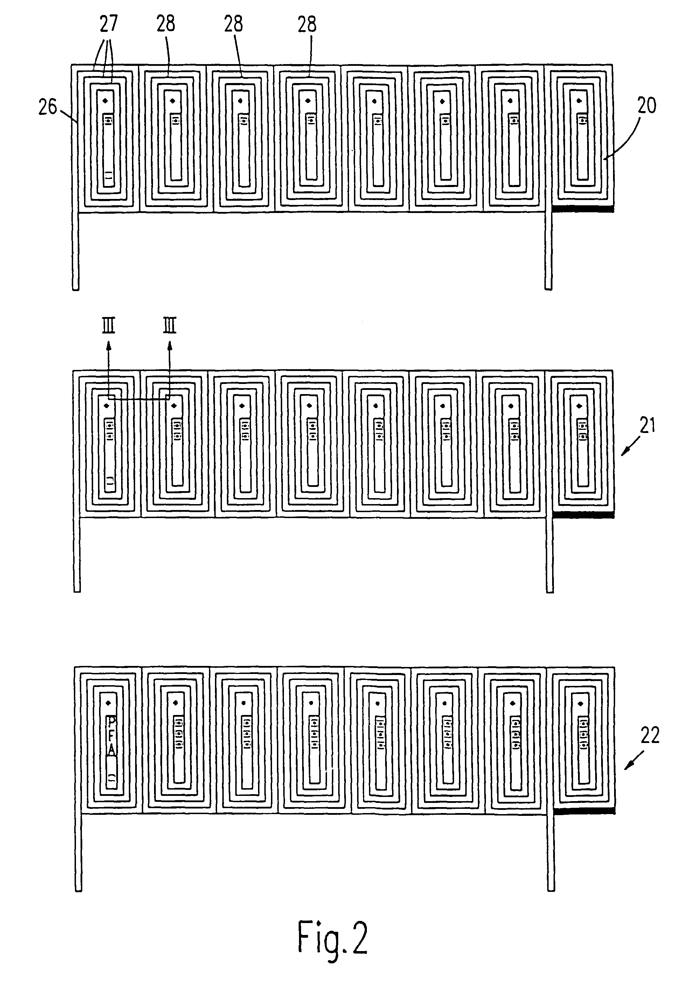

Fig. 2 zeigt im Schnitt einen Spindelmotor 1b einer anderen Ausführungsform. Der Spindelmotor nach Fig. 2 entspricht in vielen Teilen dem Spindelmotor 1a nach Fig. 1. Entsprechende Teile sind mit denselben Bezugszeichen versehen. Die Motorachse 2 des Spindelmotors 1b nach Fig. 2 ist mit der Platte 3 des nicht dargestellten Festplattengehäuses fest verbunden. Zwei hydrodynamische Axiallager 5a und 5b lagern an von der Platte 3 abliegenden Achsteil der Motorachse 2 die Nabe 6. Ein weiteres hydrodynamisches Spirallager 5c befindet sich nahe einer Trägerplatte 8. Auf der Nabe 6 ist ein permanentmagnetischer Rotormagnet 7 befestigt.

An der Motorachse 2 ist die Trägerplatte 8 vorgesehen, die die Spulenkonfiguration 9 trägt, welche aus einer gebogenen Folienwicklung besteht und später näher beschrieben wird. Die Außenseite 9a der Spulenkonfiguration 9 liegt an einem Luftspalt 13. Außenseitig wird der Luftspalt 13 begrenzt von einem mantelförmigen Joch 10 aus weichmagnetischem Material. Dieses Joch 10 ist an der Innenseite 14 der ebenfalls mantelförmigen Nabe 6 fest angeordnet. Bei diesem Aufbau ergeben sich also wieder zwei Luftspalte und zwar die Luftspalte 12 und 13, von denen der eine Luftspalt 13 das Joch 10 von der Spulenkonfiguration 9 und der andere Luftspalt 12 den Rotormagneten 7 von der Spulenkonfiguration 9 trennt.

Am äußeren Nabenteil 6c ist Platz für das Anbringen von einer oder mehreren Festplatten.

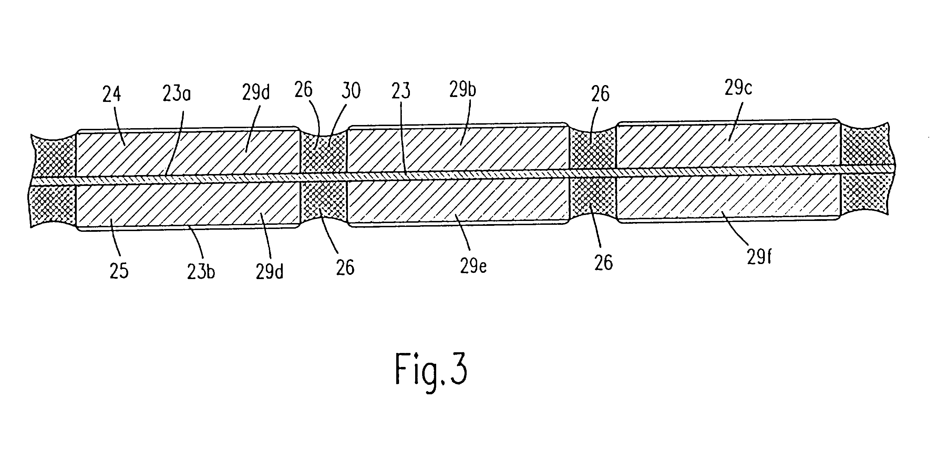

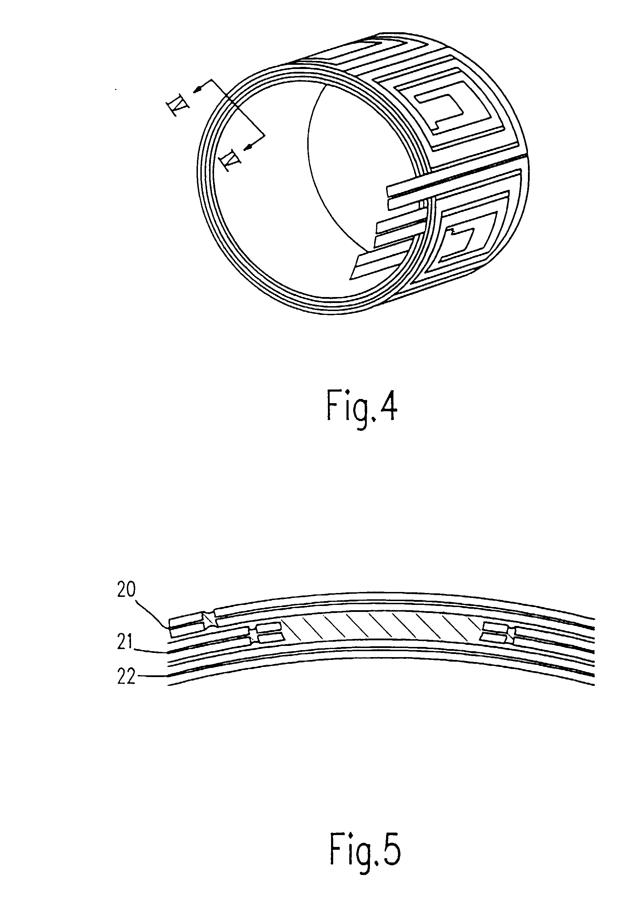

Fig. 3 zeigt in Draufsicht drei Folienwicklungen 20, 21, 22. Diese drei Folien sollen aufgerollt eine Dreiphasen-Wicklung für den Festplattenmotor werden. Der aufgerollte Zustand ist in Fig. 4 schaubildlich dargestellt. Jede einzelne Folie besteht, wie aus Fig. 3 zu ersehen ist, aus einer mittleren Kunststoffolie 23, auf deren beiderseitige Oberflächen 23a und 23b Kupferfolien 24 und 25 aufkaschiert sind. Durch ein allgemein bekanntes Ätzverfahren sind die Kupferfolien 24 und 25 so geätzt, daß sich Spalte 26 ergeben, die einzelne Kupferleiterbahnen 27 voneinander trennen, wie es aus Fig. 3 zu erkennen ist. Auf diese Weise sind auf der Folie 23 beiderseits flächenhafte Wicklungsspulen 28 gebildet, die der Motorerregung dienen sollen. Die Spulen der beiden Folienseiten werden von oben nach unten durchkontaktiert.

In einem Siebdruck- oder Roller-Coating-Verfahren werden die Spalte 26 mittels eines Haftfüllstoffes ausgefüllt. Der Haftfüllstoff ist ein aushärtender Kleber. Der Haftkleber hat die Eigenschaft, die flächenhaften Leitungszugteile 29a, 29b, 29c, 29d, 29e, 29f so stabil miteinander zu verbinden, daß die flächenhaften Leitungszüge 29 der Spule durch ihn wieder so formstabil miteinander verbunden werden, als wären die Spalte 26 noch mit dem abgetragenen Kupfer gefüllt. Das Kupfer hätte sich ungeätzt in durchgehender Bahn einwandfrei rund ausformen lassen. Dies ist nun durch das Ausfüllen der Spalte 26 mittels des Haftfüllklebers wieder erreicht. Fig. 4 zeigt schaubildlich, wie die drei Folienwicklungen 20, 21 und 22 zu einer Dreiphasen-Wicklung einwandfrei rund aufgerollt sind. Fig. 5 zeigt zur Verbesserung der Darstellung einen Schnitt, der die einwandfreien Rundungen der Folien 20, 21 und 22 noch deutlicher wiedergibt.

Durch die einwandfreie Rundung ist es möglich, die Luftspalte des Motors klein zu machen. Weiterhin ist durch die Ausbildung der hydrodynamischen Spiralrillenlager 5a, 5b und 5c eine sehr gute Radialführung erreicht. Einwandfrei runde Wicklung und der Einsatz der Spiralrillenlager minimieren die vom Motor erzeugten radialen Lagerkräfte und damit die Auslenkung der Rotorachse. Das hat zur Folge, daß der Motor eine längere Lebensdauer und/oder die Zulassung größerer Fertigungstoleranzen erlaubt. Weiter wird dadurch eine höhere Packungsdichte der Festspeicherplatten ermöglicht.

Zur Dimensionierungsorientierung kann angegeben werden, daß die Folie zwischen den Kupferbahnen eine Dicke von ca. 20 µm hat und die Kupferfolien auf etwa 110 µm Dicke bemessen sind.

## Patentansprüche

1. Elektromotor mit einem Stator, der eine zylinderförmige, von einer Trägerplatte getragenen Spulenkonfiguration (9) aufweist, und einem Rotor, der an einer umlauffähigen Nabe (6) einen Rotormagneten trägt, der an seiner Außenumfangsfläche (7a) ein Feld senkrecht zur Drehachse (16) erzeugt und der mit einem glockenförmigen Nabenteil die Spulenkonfiguration umschließt, wobei der Elektromotor (1) mit Lagerungen (5a, 5b, 5c) für die Nabe (6) und mit einem Weicheisenjoch (10) versehen ist, wobei die Spulenkonfiguration (9) frei von weichmagnetischen Teilen und außenseitig von einem mantelförmigen Weicheisenjoch (10) umgeben ist, dadurch gekennzeichnet, daß die Nabe (6) auf einer feststehenden, zentralen Motorachse (2) gelagert ist und daß axial innerhalb des Rotormagneten zwischen der Nabe (6) und der feststehenden Motorachse (2) ein hydrodynamisches Radiallager vorgesehen ist.

2. Elektromotor nach Anspruch 1, dadurch gekennzeichnet, daß das Joch (10) fest mit der Spulenkonfiguration (9) verbunden ist.

3. Elektromotor nach Anspruch 1, dadurch gekennzeichnet, daß das Weicheisenjoch (10) fest mit der Nabe (6) verbunden ist.

4. Elektromotor nach einem der Ansprüche 2 oder 3, dadurch gekennzeichnet, daß die Spulenkonfiguration (9) aus gebogenen Folienwicklungen besteht.

5. Elektromotor nach Anspruch 4, dadurch gekennzeichnet, daß die Folienwicklung (9), die auf einer tragenden Kunststoffolie aufgebaut und durch das Abtragen von Kupfermaterial gebildet ist, mit dem die Kunststoffolie (23) zuvor durchgehend kaschiert wurde, zu einem im wesentlichen gleichmäßig ausgerundeten Zylinder aufgewickelt ist, wobei das flächenhafte Gebilde aus tragender Kunststoffolie (23) und darauf haftenden flächenhaften Spulen (28) so mit einem Haftfüllstoff (30) überzogen ist, daß der Haftfüllstoff (30) die durch das Abtragen des Kupfermaterials gebildeten Spalte (26) zwischen den einzelnen Leiterbahnen ausfüllt, und daß das so stabilisierte Gebilde zu einem gleichmäßig ausgerundeten Zylinder aufgewickelt ist.

6. Elektromotor nach Anspruch 5, dadurch gekennzeichnet, daß der die Spalten ausfüllende Haftfüllstoff (30) eine solche Stabilität hat, daß die flächenhaften Leitungszüge (27) der Spulen (28) durch ihn wieder so formstabil miteinander verbunden werden, als wären die Spalten (26) noch mit dem abgetragenen Kupfer gefüllt.

7. Elektromotor nach Anspruch 5, dadurch gekennzeichnet, daß der Haftfüllstoff (30) gleichzeitig auch die Oberflächen der flächenhaften Spulen (28) mit einer Schicht überdeckt.

8. Elektromotor nach Anspruch 5, dadurch gekennzeichnet, daß als Haftfüllstoff ein aushärtender Kleber ist.

9. Elektromotor den Ansprüchen 5 und/oder 6, dadurch gekennzeichnet, daß der Haftfüllstoff durch Siebdruck oder Roller-Coating aufgetragen ist.

10. Elektromotor nach Anspruch 1, dadurch gekennzeichnet,, daß die Lagerungen aufgeteilt sind in axial (5a, 5b) und radial (5c) wirkende Spiralrillenlager.

## Claims

1. An electric motor having a stator comprising a cylindrical coil configuration (9), which is carried by a mounting plate, and having a rotor (7), which carries on a rotatable hub (6) a rotor magnet which at its outer circumference (7a) generates a field perpendicular to the axis of rotation (16) and which surrounds the coil configuration with a bell-shaped hub portion, the electric motor (1) having bearing means (5a, 5b, 5c) for the hub (6) and having a soft-iron yoke (10), the coil configuration (9) being free from soft-magnetic parts and being externally surrounded with a sleeve-shaped soft-iron yoke (10), characterized in that the hub (6) is supported on a fixed central motor shaft (2), and a hydrodynamic radial bearing is arranged axially inside the rotor magnet between the hub (6) and the fixed motor shaft (2).

2. An electric motor as claimed in claim 1, characterized in that the yoke (10) is fixedly connected to the coil configuration (9).

3. An electric motor as claimed in claim 1, characterized in that the soft-iron yoke (10) is fixedly connected to the hub (6).

4. An electric motor as claimed in claim 2 or 3, characterized in that the coil configuration (9) comprises curved foil windings.

5. An electric motor as claimed in claim 4, characterized in that the foil winding (9), which is built up on a synthetic-resin carrier foil (23) and is formed by the removal of copper material previously deposited continuously onto the synthetic-resin foil (23), is formed into a substantially evenly rounded cylinder, the planar assembly of the synthetic-resin carrier foil (23) and the planar coils (28) adhering thereto being coated with an adhesive filler material (30) in such a manner that the filler material (30) fills the gaps (26) formed between the individual conductor tracks by the removal of the copper material, and the assembly thus stabilized is wound into an evenly rounded cylinder.

6. An electric motor as claimed in claim 5, characterized in that the adhesive filler material (30) filling the gaps has such a stability that it joins the planar conductor tracks (27) of the coils to one another with a dimensional stability as though said gaps (26) were still filled with the removed copper.

7. An electric motor as claimed in claim 5, characterized in that the adhesive filler material (30) at the same time forms a layer covering the upper surfaces of the planar coils (28).

8. An electric motor as claimed in claim 5, characterized in that the adhesive filler material is a curable adhesive.

9. An electric motor as claimed in claim 5 and/or 6, characterized in that the adhesive filler material is applied by silk-screen printing or roller-coating.

10. An electric motor as claimed in claim 1, characterized in that the bearing means comprise axially acting (5a, 5b) and radially acting (5c) spiral-groove bearings.

## Revendications

1. Moteur électrique avec un stator qui présente une configuration de bobines (9) cylindrique portée par une plaque de support et un rotor qui porte sur un moyeu (6) à rotation, un aimant de rotor qui produit sur sa périphérie extérieure (7a) un champ perpendiculaire à l'axe de rotation (16) et qui renferme la configuration de bobines avec une pièce de moyeu en forme de cloche, le moteur électrique (1) étant doté de paliers (Sa, 5b, 5c) pour le moyeu (6) et d'une culasse en fer doux (10), la configuration de bobines (9) étant exempte de pièces magnétiques douces et renfermée côté extérieur par une culasse en fer doux (10) périphérique, caractérisé en ce que le moyeu (6) est logé sur un axe de moteur (2) central fixe et qu'il est prévu un palier radial hydrodynamique axialement à l'intérieur de l'aimant de rotor entre le moyeu (6) et l'axe du moteur (2) fixe.

2. Moteur électrique selon la revendication 1, caractérisé en ce que la culasse (10) est fixée à demeure à la configuration de bobines (9).

3. Moteur électrique selon la revendication 1, caractérisé en ce que la culasse en fer doux (10) est fixée à demeure au moyeu (6).

4. Moteur électrique selon l'une des revendications 2 ou 3, caractérisé en ce que la configuration de bobines (9) se compose d'enroulements de feuilles cintrés.

5. Moteur électrique selon la revendication 4, caractérisé en ce que l'enroulement de feuilles (9) qui est conçu sur une feuille en plastique de support et est formé par l'enlèvement du cuivre avec lequel la feuille de plastique (23) a préalablement été plaquée est enroulée en un cylindre arrondi de manière essentiellement uniforme, la forme superficielle de la feuille en plastique (23) de support et des bobines planes adhérant à celle-ci étant recouverte d'une charge adhérente (30) de telle sorte que la charge adhérente (30) remplit la fente (26) formée entre les différentes bandes conductrices par l'enlèvement du cuivre et que la forme ainsi stabilisée est enroulée en un cylindre de forme uniformément ronde.

6. Moteur électrique selon la revendication 5, caractérisé en ce que la charge adhérente (30) remplissant les fentes présente une stabilité telle que les pistes conductrices planes (27) des bobines (28) sont reliées entre elles de manière aussi stable que si les fentes (26) étaient encore remplies du cuivre enlevé.

7. Moteur électrique selon la revendication 5, caractérisé en ce que la charge adhérente (30) recouvre simultanément les surfaces des bobines planes (28) d'une couche.

8. Moteur électrique selon la revendication 5, caractérisé en ce qu'un adhésif à durcir est utilisé comme charge adhérente.

9. Moteur électrique selon les revendications 5 ou 6, caractérisé en ce que la charge adhérente est appliquée par sérigraphie ou roller coating.

10. Moteur électrique selon la revendication 1, caractérisé en ce que les logements sont répartis en paliers à rainures spiralées agissant axialement (5a, 5b) et radialement (5c).
